# EUROPEAN PATENT SPECIFICATION

(11) **EP 0 486 115 B1**
(45) Date of publication and mention of the grant of the patent: **06.07.1994**
(21) Application number: 91202976.6
(22) Date of filing: 15.11.1991
(51) Int. Cl.: A01C 23/02, A01C 5/06

(54) **Manure applicator device**
Injektionsvorrichtung für Flüssigdünger
Appareil pour injecter du lisier

(30) Priority: 16.11.1990 NL 9002508
(43) Date of publication of application: 20.05.1992
(73) Proprietor: Jansen, Albertus, NL-3774 JP Kootwijkerbroek (NL)
(72) Inventor: Jansen, Albertus, NL-3774 JP Kootwijkerbroek (NL)
(74) Representative: de Vries, Erik Eduard

(56) References cited:
- EP-A- 0 352 865
- DE-A- 3 439 478
- DE-C- 290 919
- DE-U- 9 000 053
- GB-A- 2 056 238
- US-A- 2 912 944

## Description

The invention relates to a method for applying liquid manure into farming land or grass land comprising: cutting furrows into the ground and supplying liquid manure into the furrows.

Such a method is disclosed in US-A-2,912,914. The liquid fertilizer applicator shown in this publication comprises disc-type rotatable colters of substantial thickness at the center and tapering to a thin edge at the circumference, said colters cutting V-shaped furrows in the grounds. The fertilizer is delivered through nozzles directly into the furrows. The ground is pushed aside along the entire height of the furrows but as the width of the furrows decreases in downward direction, the ground bounding the higher parts of the furrows is more compacted than the ground bounding the bottom of the furrows. The fertilizer will follow the part of the least resistance and will substantially drain off through to lower part of the furrows. As a consequence the soil between two furrows will not be sufficiently fed with fertilizer and the fertilizer is unequally distributed. Further the ground water is contaminated.

The object of the invention is to avoid this draw back and therefore the method mentioned in the preamble is characterized in that before the manure is supplied in the furrows, the soil bounding the walls of the bottom part of the furrows is compacted so that it is less permeable for the manure than the soil bounding the walls of the furrow part extending above said bottom part.

Manure supplied into the furrows having compacted bottom part walls, will easily flow sideways, whereas manure in the bottom part of the furrows will not easily flow vertically downwards in the ground. The root zone of the vegetation, in particular grass, will be able to take in manure effectively. The distance between two adjacent furrows may be larger than was possible up to now.

The invention also relates to an apparatus for applying liquid manure into farming land or grass land in accordance with the above-mentioned method, comprising a frame member to which at least one cutting disc is rotatably mounted about a substantially horizontal axis, said cutting disc being bounded by two substantially vertical spaced surfaces and two sloping surfaces which merge into a cutting edge, a nozzle which - as seen in the moving direction of the apparatus - is arranged behind the disc to supply liquid manure into the furrow cut by the cutting disc, and means to hold the lower part of the disc between ground level.

From the above-mentioned US-A-2,912,914 such an apparatus is known.

To get the ground bounding the bottom part of the furrows compacted considerably and the ground bounding the vertical walls of the furrows not or hardly compacted, the apparatus is characterized in that said means to hold the lower part of the cutting disc beneath ground level maintains not only a part of the sloping surfaces of the disc but also a part of the vertical surfaces of the disc beneath ground level so that the furrow cut by the disc has two vertical walls and a V-shaped bottom, and that the angle a between each of the sloping surfaces of the cutting disc and the vertical plane running through the cutting edge amounts 110-160° so that the soil bounding the walls of the V-shaped furrow bottom being compacted so that it is less permeable for the liquid manure than the soil bounding the walls of the vertical surfaces of the furrow.

The invention will be further elucidated on the basis of the following description, provided merely by way of example, of the embodiment of the manure applicator device according to the invention shown in the enclosed drawings. In the drawings:
figure 1 shows the manure applicator device according to the invention having a disc-shaped cutting means;
figure 2 is a sideview of a part of the cutting means of figure 1; and
figure 3 shows the cross section of a trench cut by the cutting means of figures 1 and 2.

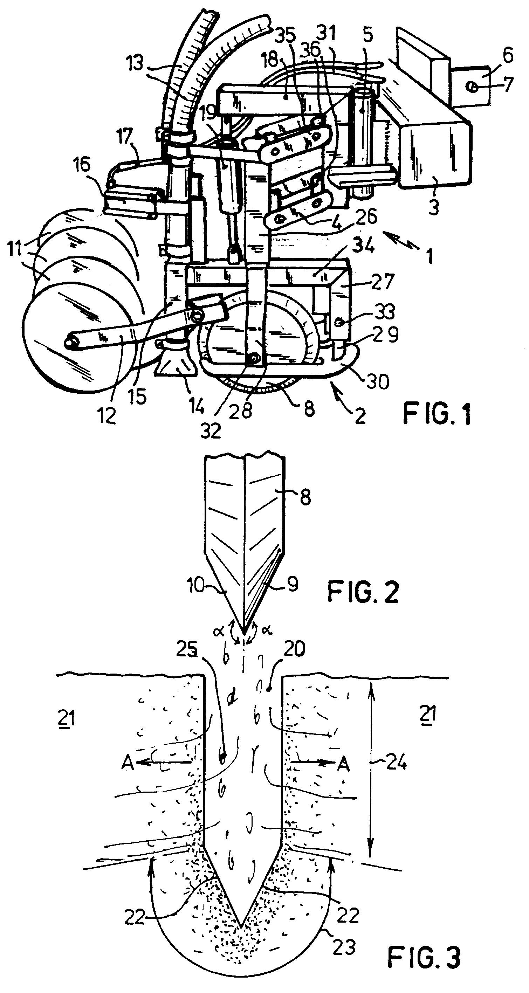

The manure applicator device comprising frame 1 and shown in figure 1 is adapted to be fastened by fastening plate 6 and pin 7 to a manure tank trailer, not shown, driven by a tractor. A beam 3 extending perpendicular to the operational direction is indirectly secured to the fastening plate 6. At the rear of the beam 3 a vertical hinge joint 5 is provided, to which frame member 2 is attached, so that the frame member 2 can rotate freely in the horizontal plane with respect to the beam 3. On beam 3 more, e.g. 15 frame members 2 may be arranged in transverse direction. The frame member 2 comprises an L-shaped support member 18, the vertical leg of which being connected with an upright bar 26 by means of a connecting parallellogram 4, said bar forming a part of a cutting disc suspension member 34 for cutting disc 8. The connecting parallellogram 4 is connected with fastening plates 36 attached to the support member 18 and the bar 26 through hinge joints 35. The horizontal leg of the L-shaped support 18 is connected with a horizontal member of a U-shaped structure 27 by means of lift cylinder 19, said U-shaped structure forming a part of the cutting disc suspension member 34. The lift cylinder 19 is operable through pneumatic line 31 which is connected with suitable controlling means on the tractor. Naturally, the lift cylinder 19 can be alternatively controlled, viz. hydraulically. By controlling the lift cylinder 19 the height of the cutting disc suspension member 34 with respect to support member 18 and therewith with respect to the beam 3 can be adjusted, whereby the force with which the disc is pressed into the soil can be affected as well as the depth of the trench to be made with the cutting disc 8. The cylinder 19 present for each frame member 2 preloads the suspension member 34 downwardly and therewith also functions as it were as spring suspension for the disc 8, so that when the cutting disc 8 encounters a hole or bump, the respective cutting disc can move temporarily up or down in generally independent from the other cutting discs.

The U-shaped structure 27 of the cutting disc suspension member 34 is invertedly arranged, a bar 29 protruding from the bottom side of a leg thereof, to which bar a sliding shoe 30 is connected. The position of the shoe 30 with respect to the U-shaped structure 27 is assured by clamping screw 33. By simply turning the clamping screw 33 lose the shoe 30 can be brought upwardly or downwardly with respect to the U-shaped structure 27 and consequently with respect to the rest of the frame member 2. Consequently, the shoe 30 functions as trench and cutting depth limiter, e.g. for the case the soil to be treated is locally relatively soft.

On the cutting disc suspension member 34 also a fork structure is provided, the lower ends of the fork 28 being connected to one another by means of a transverse pin 32 forming the bearing for the cutting disc 8. The cutting disc 8 may rotate freely about the pin 32.

Seen in operational direction, a nozzle 14 has been arranged behind the cutting disc 8, said nozzle 14 being connected to a manure line 13 connected to the manure tank trailer and passed through the rear leg of structure 27. The flow opening of the manure line 13 can be controlled by means of valve 16 pneumatically controlled through line 17. For each frame member 2 a manure line 13, a stopping valve 16 and a control line 17 are provided. Finally, as seen in operational direction, further backwards ridging discs 11 are arranged that are pivotably, in the vertical plane, connected with the other leg of the U-shaped structure 27 by means of bar 12.

It is remarked that the manure applicator device according to the invention may also be provided with a controllable, preferably hydraulic lift structure (not shown) which on the one hand is fixedly attached to the fastening plate 6, and on the other hand is fixedly attached to the beam 3, so that by operating this lift structure the beam 3 and therewith all cutting discs 8 can be adjusted simulatenously at the desired (cutting) height with respect to the plate 6 and thus with respect to the manure tank trailer.

In figure 2 it can be seen that the cutting disc 8 is formed by two truncated cones 9 and 10 lying with their largest base surface against one another. The diameter of the cutting disc may be 350 mm and have a thickness of 25 mm. Here, the angle α the generatrices of the surfaces of the casing of truncated cones 9 and 10 make with the plane in which the largest base surfaces are positioned, is approximately 150° which is within the preferred range of about 110 to 160°. As a result the cutting edge of the disc 8 is fairly blunt. When using the manure applicator device according to the invention, a trench 20 in the soil 21 as shown in figure 3 will then be obtained. Once the cutting disc 8 is penetrated into the soil during trench cutting and rolls on in the operational direction a trench is made wherein section 23 of the circumference 22 of the trench is formed by compressed, compacted material and the section 24 of the circumference of the trench has maintained a relatively open structure. Thus, the manure 25 supplied by means of the manure line 13 and nozzle 14, which e.g. is at a depth of from 4 to 12 cm, will substantially flow off sidewards in the direction of the arrows A.

## Claims

1. A method for applying liquid manure into farming land or grass land comprising: cutting furrows into the ground and supplying liquid manure into the furrows, characterized in that before the manure is supplied in the furrows, the soil bounding the walls of the bottom part of the furrows is compacted so that it is less permeable for the manure than the soil bounding the walls of the furrow part extending above said bottom part.

2. Apparatus for applying liquid manure into farming land or grass land in accordance with the method according to claim 1, comprising
a frame member (2) to which at least one cutting disc (8) is rotatably mounted about a substantially horizontal axis, said cutting disc (8) being bounded by two substantially vertical spaced surfaces and two sloping surfaces (9, 10) which merge into a cutting edge,
a nozzle (14) which - as seen in the moving direction of the apparatus - is arranged behind the disc to supply liquid manure into the furrow cut by the cutting disc (8)
and means (4, 29, 33, 19, 31) to hold the lower part of the cutting disc (8) beneath ground level,
characterized in,
that said means (4, 29, 33, 19, 31) to hold the lower part of the cutting disc (8) beneath ground level maintains not only a part of the sloping surfaces (9, 10) of the disc but also a part of the vertical surfaces of the disc beneath ground level so that the furrow cut by the disc has two vertical walls and a V-shaped bottom, and that the angle α between each of the sloping surfaces of the cutting disc (8) and the vertical plane running through the cutting edge amounts 110-160° so that the soil bounding the walls of the V-shaped furrow bottom being compacted so that it is less permeable for the liquid manure than the soil bounding the walls of the vertical surfaces of the furrow.

## Patentansprüche

1. Verfahren zum Anwenden flüssigen Düngers auf Ackerland oder Gras- bzw Weideland, das aufweist: Furchen werden in den Boden geschnitten und der flüssige Dünger wird den Furchen zugeführt, dadurch gekennzeichnet, dass die die Wände des unteren Teils der Furchen begrenzende Erde verdichtet wird, bevor der Dünger den Furchen zugeführt wird, so dass sie für den Dünger weniger durchlässig ist als die Erde, die die Wände des Teils der Furche begrenzt, der sich oberhalb besagten unteren Teils erstreckt.

2. Vorrichtung zum Anwenden flüssigen Düngers auf Ackerland oder Gras-bzw. Weideland nach dem Verfahren gemäss Anspruch 1, die aufweist, einen Gestell- und Rahmenteil (2), an der wenigstens eine Schneidscheibe (8) drehbar um eine im wesentlichen horizontale Achse befestigt ist, wobei besagte Schneidscheibe (8) durch zwei im wesentlichen vertikal beabstandete Oberflächen und zwei geneigte bzw. schräge Oberflächen (9, 10), die in eine Schneidkante übergehen, begrenzt ist,
ein Mundstück bzw. Düse (14), die - in der Bewegungsrichtung des Apparates gesehen - hinter der Scheibe angeordnet ist, um der durch die Schneidscheibe (8) geschnittenen Furche flüssigen Dünger zuzuführen,
und Mittel (4, 29, 33, 19, 31), um den unteren Teil der Schneidscheibe (8) unter dem Bodenniveau zu halten, dadurch gekennzeichnet, dass die Mittel (4, 29, 33, 19, 31), um den unteren Teil der Schneidscheibe (8) unterhalb des Bodenniveaus zu halten, nicht nur einen Teil der geneigten bzw. schrägen Oberflächen (9, 10) der Scheibe, sondern ebenso einen Teil der vertikalen Oberflächen der Scheibe unterhalb des Bodenniveaus hält, so dass die durch die Scheibe geschnittene Furche zwei Wände und einen V-förmigen Boden hat, und dass sich der Winkel α zwischen jeder der beiden geneigten bzw. schrägen Oberflächen der Schneidscheibe (8) und der vertikalen Ebene, die durch die Schneidkante läuft, auf 110 bis 160°C beläuft,
so dass die Erde, die die Wände des V-förmigen Furchen bodens begrenzt, verdichtet wird, so dass sie für den flüssigen Dünger weiniger durchlässig ist als die Erde, die die Wände der vertikalen Flächen der Furche begrenzt.

## Revendications

1. Procédé pour appliquer du purin dans un terrain d'exploitation agricole ou un terrain à herbage comprenant : le creusement de sillons dans le sol et l'envoi de purin dans les sillons, caractérisé en ce que, avant d'envoyer le purin dans les sillons, on tasse le sol reliant les parois de la partie inférieure des sillons de manière qu'il soit moins perméable pour le purin que le sol reliant les parois de la partie du sillon qui s'étendent au-dessus de ladite partie inférieure.

2. Appareil pour appliquer du purin dans un terrain d'exploitation agricole ou un terrain à herbage à l'aide du procédé selon la revendication 1, comprenant un châssis (2) auquel au moins un disque de coupe (8) est monté de façon tournante autour d'un axe sensiblement horizontal, ledit disque de coupe (8) étant relié par deux surfaces espacées ensiblement verticales et deux surfaces inclinées (9 ,10) qui fusionnent sous forme d'une arête coupante, une buse (14) qui, telle que vue dans la direction de déplacement de l'appareil, est disposée derrière le disque pour envoyer du purin dans le sillon creusé par le disque de coupe (8) et des moyens (4, 29, 33, 19, 31) pour maintenir la partie inférieure du disque de coupe (8) en-dessous du niveau du sol, caractérisé en ce que les moyens (4, 29, 33, 19, 31) pour maintenir la partie inférieure du disque de coupe (8) en dessous du niveau du sol maintiennent non seulement une partie des surfaces inclinées (9, 10) du disque mais également une partie des surfaces verticales du disque en dessous du niveau du sol de sorte que le sillon creusé par le disque comporte deux parois verticales et un fond en forme de V, and en ce que l'angle α entre chacune des surfaces inclinées du disque de coupe (8) et le plan vertical passant par l'arête coupante est de 110-160° de sorte que le sol reliant les parois de la partie inférieure du sillon en forme de V en cours de tassement est moins perméable pour le purin que le sol reliant les parois des surfaces verticales du sillon.
